**Europäisches Patentamt**

**European Patent Office**

**Office européen des brevets**

(19)

(11) Numéro de publication : **0 351 355 B1**

(12)

# FASCICULE DE BREVET EUROPEEN

(45) Date de publication du fascicule du brevet :
**14.12.94 Bulletin 94/50**

(51) Int. Cl.$^5$ : **G06K 11/12,** G06K 11/10

(21) Numéro de dépôt : **89810421.1**

(22) Date de dépôt : **05.06.89**

(54) **Tablette de type résistif à plusieurs conducteurs pour l'entrée de coordonnées.**

(30) Priorité : **13.07.88 CH 2673/88**

(43) Date de publication de la demande :
**17.01.90 Bulletin 90/03**

(45) Mention de la délivrance du brevet :
**14.12.94 Bulletin 94/50**

(84) Etats contractants désignés :
**CH DE ES FR GB IT LI NL**

(56) Documents cités :
**EP-A- 0 134 853
GB-A- 2 046 450
PATENT ABSTRACTS OF JAPAN, vol. 7, no.
192 (P-218)[1337], 23 août 1983, page 5P 218;
JP-A-58 90 234 (SONY K.K.) 28-05-1983**

(73) Titulaire : **AID 3 GROUP LTD.**
**17 Dame Street**
**IE-Dublin 2 (IE)**

(72) Inventeur : **Mizzi, François**
**16, Avenue des Gressets**
**F-78170 La Celle Saint Cloud (FR)**

(74) Mandataire : **Dousse, Blasco et al**
**7, route de Drize**
**CH-1227 Carouge/Genève (CH)**

## Description

On connaît divers dispositifs permettant de former des signaux caractéristiques de la position d'un point sur une surface, point sur lequel on exerce une pression, par exemple du doigt.

Ces dispositifs, dits "touch sensitives", constituent des "digitaliseurs tactiles" pouvant servir à saisir toutes sortes d'informations alphanumériques ou graphiques; on les nomme "tablettes" ou membranes. Lorsque ces tablettes sont réalisées au moyen de matériaux transparents, on peut les utiliser en recouvrement de divers types d'écrans.

Parmi les nombreuses exécutions de tels dispositifs proposées jusqu'ici, les plus précis sont ceux englobant deux pluralités de pistes conductrices parallèles entre elles et, pour chaque pluralité, perpendiculaires à celles de l'autre pluralité. Ces pistes sont disposées face à face sur un support propre à chaque pluralité de pistes, l'un de ces supports étant une membrane flexible, et sont maintenues à l'écart de celles de l'autre pluralité par un certain nombre d'organes de distancement parsemés entre les membranes. Les pistes de l'une des deux pluralités sont susceptibles d'être portées en contact momentané avec les pistes de l'autre pluralité par déformation localisée de la membrane flexible dans ses portions comprises entre les organes de distancement ci-dessus.

Parmi les documents les plus récents traitant d'une structure de ce genre, on citera, à titre d'exemple, les demandes GB 2046450 et EP 0145651.

Dans ces documents, comme du reste dans d'autres documents antérieurs, tels les Kokaï japonais 57-19476, 57-37909 et 57-37910 et les brevets US 3304612 et FR 2453452, les pistes de chacune des deux pluralités de pistes sont rattachées galvaniquement, par une extrémité homologue, en des points distincts d'une résistance collectrice propre à chaque pluralité et dont la valeur ohmique varie linéairement sur toute sa longueur.

Le signal électrique perçu par ces résistances collectrices, lorsqu'une pression a été exercée en un point donné de la membrane flexible du dispositif qui les englobe, doit généralement être "traité" par un ensemble de circuits électroniques et de logiciels complexes et délicats, aux résultats de qualité liée, à la fois, au mode de détection mis en oeuvre et aux particularités structurelles de ces circuits.

Dans le cas du document GB 2046450 cité, les deux résistances collectrices que comporte le dispositif concerné sont branchées dans un circuit alimenté par une source de courant de valeur rigoureusement constante, chaque résistance collectrice étant reliée en série à une résistance de mesure, de valeur connue, aux extrémités de laquelle est branché un amplificateur différentiel mesurant l'intensité du courant qui la traverse.

On relèvera encore que le document GB 2046450 requiert, en outre, que l'écartement des diverses pistes conductrices du dispositif décrit soit rigoureusement constant pour que chaque segment de la résistance collectrice à laquelle elles sont rattachées, compris entre deux pistes voisines, soit identique sur toute la longueur de cette résistance collectrice.

Il découle de ce qui précède que, mise à part la nécessité d'usage d'une source de courant rigoureusement constant, et, plus particulièrement lorsque le dispositif en question est destiné à une utilisation dans des displays interactifs (touch sensitives) connaissant une production par dizaines de milliers d'exemplaires, une précision de mesure acceptable ne peut être garantie qu'en étalonnant chaque dispositif produit en fonction des irrégularités de fabrication et des différences correspondantes de la valeur ohmique des segments de résistance collectrice compris entre les diverses pistes conductrices du dispositif. Dans de telles conditions, il est patent que le coût d'un ensemble tel celui décrit dans le brevet GB 2046450 sera particulièrement élevé et, donc, non concurrentiel.

Dans l'espoir sans doute d'écarter ces inconvénients, le document GB 2046450 propose également une variante d'exécution dans laquelle les mesures d'intensité de courant nécessaires à la détermination de la position des pistes en contact mutuel sont remplacées par des mesures de tension. Malheureusement, dans ce cas, les résultats sont faussés par le fait que les relations algébriques citées en référence doivent prendre en compte les valeurs desdites résistances de mesure reliées en série avec les résistances collectrices.

En conséquence, les valeurs mesurées ne peuvent pas varier linéairement avec la position réelle des pistes en contact dont le dispositif est sensé localiser la position.

Dans le cas de la solution préconisée dans le document EP 0145651, l'évaluation du signal reçu par les résistances collectrices est effectuée par un dispositif de type "flip-flop" livrant, d'abord, une information caractéristique de l'abscisse du point recherché, puis, un autre signal relatif a l'ordonnée de ce point et ainsi de suite, ce mode de fonctionnement se traduisant, pour l'usager, par une limitation perceptible dans la vitesse d'actionnement répétitif du dispositif.

Une telle temporisation est due, pour une grande part, à un effet capacitif intervenant au niveau des pistes conductrices, par suite du fonctionnement intermittent du dispositif flip-flop précité.

La présente invention vise la création de dispositifs du type évoqué ci-dessus, par exemple de tablettes sensibles au toucher, pour la saisie d'informations, obviant notamment aux inconvénients relevés précédemment.

Elle propose, à cet effet, dans le cadre d'un concept inventif commun, divers dispositifs pour localiser la position inconnue d'une piste conductrice électrique déterminée appartenant à un ensemble de conducteurs distincts. Les caractéristiques essentielles de l'invention sont définies dans les revendications 1 et 2.

L'invention concerne également l'utilisation de tels dispositifs dans une tablette sensible au toucher, comportant deux de ces dispositifs pour la saisie d'informations. Ses caractéristiques font l'objet notamment de la revendication 13.

Grâce à ce type de dispositifs, on obtient en effet un signal caractéristique de la position inconnue du conducteur intéressé par la mesure requise, très précis et facile à exploiter. En outre, dans le cas d'une tablette du genre ci-dessus, le résultat de cette mesure peut être obtenu simultanément pour l'une et l'autre des deux coordonnées utilisées pour définir la position de tout point de la tablette sur lequel on aurait exercé une pression.

La mise en oeuvre d'une telle tablette n'est donc sujette à aucune limitation perceptible dans la vitesse de son actionnement répétitif, par pression alternée des doigts d'un usager.

Les dessins annexés représentent, très schématiquement et à titre d'exemple, différentes formes d'exécution et variantes de l'objet de la présente invention:

La fig. 1 montre, en perspective, une tablette de saisie englobant une première forme d'exécution du dispositif selon l'invention;

La fig. 1a est une vue de détail de la fig. 1, à plus grande échelle;

La fig. 1b est une vue en coupe d'un autre détail de la fig. 1;

La fig. 1c est un diagramme explicatif;

Les figs 2 à 7 sont relatives à des variantes d'exécution du dispositf selon l'invention.

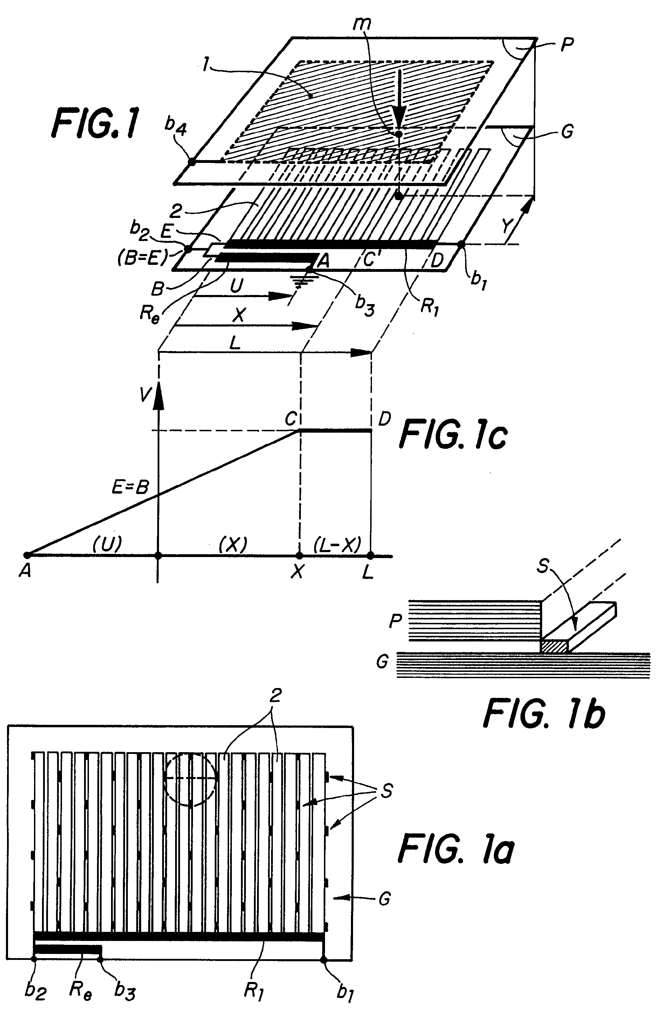

La fig. 1 représente, très schématiquement, une tablette destinée à saisir des valeurs d'abscisses x. Elle comprend un premier substrat souple P, par exemple un film mince de polyesther ou de polycarbonate ou de verre trempé très fin, dont l'épaisseur usuelle est comprise entre 100 et 300 $\mu$, par exemple de l'ordre de 150 $\mu$, et dont la face inférieure est revêtue d'une couche conductrice de l'électricité 1, par exemple de l'ITO (transparent) ou du carbone (opaque).

La tablette représentée comprend, en outre, déposée sur un substrat isolant G, par exemple du verre, une pluralité de conducteurs parallèles 2, constitués par exemple par de l'ITO ou du carbone, déposé sur le substrat par toute technique connue, et présentant chacun une largeur de quelques dizaines de $\mu$ à quelques mm, pour une épaisseur de quelques dizaines de A par exemple.

Sur le substrat G, et entre certains conducteurs 2, sont disposés des organes de distancement S (fig. 1a et 1b) obtenus par exemple par sérigraphie, se présentant sous la forme de bâtonnets allongés dont les dimensions peuvent être de l'ordre de 100 à 1000 $\mu$ pour leur longueur, de 50 à 500 $\mu$ pour la largeur et de 1 à 200 $\mu$ pour l'épaisseur. De façon générale, l'épaisseur devrait être au plus égale à la largeur, cette dernière étant elle-même au plus égale à la longueur de bâtonnet. Ces bâtonnets pourront être réalisés en polyéthylène, par exemple par sérigraphie, en forme de demi-cylindres notamment.

Comme on le voit en détail sur la fig. 1b, ces bâtonnets servent à maintenir distant le substrat P, et son revêtement conducteur 1, des conducteurs 2 du substrat G. A cet effet, les bâtonnets S sont disséminés sur tout le substrat G et sont disposés en files entre les conducteurs 2 à une distance l'un de l'autre pouvant être comprise entre 1000 et 10000 $\mu$ suivant la souplesse de P.

Grâce à cette conformation particulière des bâtonnets, dont on remarquera par exemple en fig 1b, qu'ils se présentent notamment sous la forme allongée, dont la largeur est supérieure à l'épaisseur, il est possible d'éviter, en position assemblée de la tablette, que ne se produise l'inconvénient rencontré dans la technique antérieure faisant emploi d'organes de distancement constitués par des saillies très fines, produisant un véritable poinçonnage de la membrane souple qu'ils soutiennent lorsque celle-ci est pressée au moyen d'un corps mou tel que le doigt d'un usager. Dans un tel cas, ces fines saillies produisent l'effet d'un "piquet de tente" se traduisant par une déformation permanente de la membrane devenant de plus en plus prononcée au fur et à mesure des pressions effectuées par le doigt de l'usager sur elles. Il s'ensuit la production de courts-circuits par des contacts locaux indésirables, indépendants de tout actionnement de la tablette, entre le ou les conducteurs portés par la membrane souple et les pistes conductrices sous-jacentes recouvrant le substrat inférieur de la tablette.

A leur extrémité inférieure (voir dessin fig. 1a), les conducteurs 2 sont rattachés galvaniquement à une résistance collectrice $R_1$, s'étendant sur toute la longueur du réseau que forment les conducteurs 2 et dont la valeur ohmique croît rigoureusement de façon linéaire, d'une extrémité à l'autre de cette résistance. Cette résistance peut être constituée par une couche de carbone, par exemple, d'une largeur très supérieure à celle de ses zones de contact avec les conducteurs 2, soit de quelques centaines de $\mu$ à quelques millimètres, et d'une épaisseur de l'ordre du micron par exemple. L'extrémité droite de la résistance $R_1$ est rattachée à une borne de mesure $b_1$, par un conducteur de résistance négligeable, par exemple une couche d'argent, alors que son extrémité gauche est rattachée, également par un conducteur en argent, à l'extrémité gauche d'une résistance étalon $R_e$ constituée, comme la résistance $R_1$, d'une couche de carbone dont la valeur ohmique varie linéairement avec la longueur de la couche et de résistivité spécifique identique à celle de la résistance $R_1$.

L'extrémité gauche et l'extrémité droite de la résistance $R_e$ sont rattachées, par des connexions en argent, à des bornes $b_2$ et $b_3$ respectivement. La longueur U de la résistance $R_e$ est fixée en fonction de la longueur L de la résistance $R_1$. Avantageusement, elle sera égale à 1/2 L. En pratique, elle ne devrait pas être inférieure à 0,2 fois la longueur L pour une précision désirée de valeur acceptable. On indiquera, par la suite, les raisons techniques de ce choix.

La tablette décrite (fig. 1) se met en oeuvre en rattachant la borne $b_3$ de la résistance $R_e$ à la masse et une borne $b_4$, à laquelle est connectée la couche conductrice 1 du substrat P, à une source de potentiel, par exemple d'une valeur de 5 Volts.

Si donc on exerce une pression sur le point $\underline{m}$ du substrat P, d'intensité suffisante pour porter en contact la couche conductrice 1 de ce substrat et le conducteur 2 du substrat G passant sous ce point m, ce conducteur sera porté à un potentiel correspondant sensiblement au potentiel de la borne $b_4$.

Sur la résistance $R_1$, on aura un potentiel correspondant C, en un point c' d'abscisse inconnue x par rapport à l'extrémité gauche de la résistance $R_e$, potentiel qu'on retrouvera intégralement à l'extrémité droite de la résistance $R_1$ (borne $b_1$), car aucun courant ne sort par cette borne.

Lorsque la résistivité spécifique, par unité de longueur, des résistances $R_1$ et $R_e$ est identique, et que la valeur ohmique de ces résistances varie linéairement, le potentiel diminue linéairement le long de ces résistances depuis la valeur C jusqu'à une valeur nulle, la borne $b_3$ étant mise à la masse (potentiel appelé A par convention).

Le potentiel à l'extrémité gauche de la résistance $R_1$ (potentiel E), étant égal à celui de l'extrémité gauche de la résistance $R_e$ (potentiel B), aura donc une valeur intermédiaire comprise entre les valeurs C et A, ainsi qu'on le voit clairement sur la figure 1c laquelle représente la variation du potentiel aux divers points des résistances $R_1$ et $R_e$.

Si x est l'abscisse inconnue du point $\underline{m}$ de la tablette, U la longueur de la résistance étalon $R_e$, et L la longueur de la résistance collectrice $R_1$, on voit que le potentiel chute de la valeur C = D à la valeur A = O sur une longueur totale de résistance égale à U + x alors que le potentiel chute de la valeur B, existant à la borne $b_2$, à une valeur nulle sur la borne $b_3$.

En considérant le diagramme de la fig. 1c, on voit que

$$\frac{x + U}{D - A} = \frac{U}{E - A} \quad \text{ou, encore,} \quad \frac{x}{U} = \frac{D - E}{B - A} \text{ (avec B = E)}$$

$$\frac{x}{L} = k \cdot \frac{D - E}{B - A} \text{ avec } k = \frac{U}{L} \text{ connu}$$

Ainsi, l'abscisse du point m peut-elle être obtenue à partir, d'une part, de la différence des potentiels existant aux extrémités des résistances $R_1$ (collectrice) et $R_e$ (étalon), différence qui peut être déterminée par tous moyens adéquats, et d'autre part, du rapport entre les résistances $R_1$ et $R_e$. On peut obtenir la valeur x/L en branchant les bornes $b_1$, $b_2$ et $b_3$ à divers moyens de calculs électroniques.

La formule citée ci-dessus n'est évidemment vraie qu'à condition que la résistance collectrice et la résistance étalon présentent toutes deux la même résistivité spécifique par unité de longueur: la valeur de x/L ainsi obtenue devra donc être multipliée par un facteur d'ajustement tenant compte des différences éventuelles de section et de résistivité qui pourraient exister entre ces deux résistances.

Il convient, à ce point, de relever que la précision du résultat obtenu de cette manière dépend de la longueur U de la résistance étalon $R_e$ par rapport à la longueur L de la résistance collectrice $R_1$. Cette précision sera, par ailleurs, différente selon la position occupée par le point M sur la tablette de programmation.

On peut en effet démontrer que l'erreur $\delta$ du rapport x/L, lorsque x varie de O à L, est une fonction linéaire de x telle que

$$\delta \cdot \frac{x}{L} = k \cdot \frac{|U - x|}{U^2} \cdot \varepsilon \qquad \text{avec } k = \frac{U}{L} \text{ connu}$$

dans laquelle $\varepsilon$ est l'erreur absolue des longueurs U et L

$$\varepsilon = \delta U = \delta L.$$

La valeur de $\delta \cdot \frac{x}{L}$ devient nulle lorsque x = U; elle est égale à $\varepsilon/L$ pour x = 0 ou x = 2U

Ainsi la précision moyenne sera optimale pour U = L/2 c'est-à-dire lorsque la résistance étalon $R_e$ présentera une longueur U égale à la moitié de la longueur L de la résistance $R_1$ car on minimise alors le maximum de l'écart des variations de l'erreur

$$\delta \cdot \frac{x}{L} \text{ pour x compris entre O et L.}$$

En pratique, en fonction des précisions acceptables pour x/L, on pourra accepter des résistances étalon $R_e$ ayant des longueurs U non inférieures à 0,2 fois la longueur L de la résistance collectrice $R_1$.

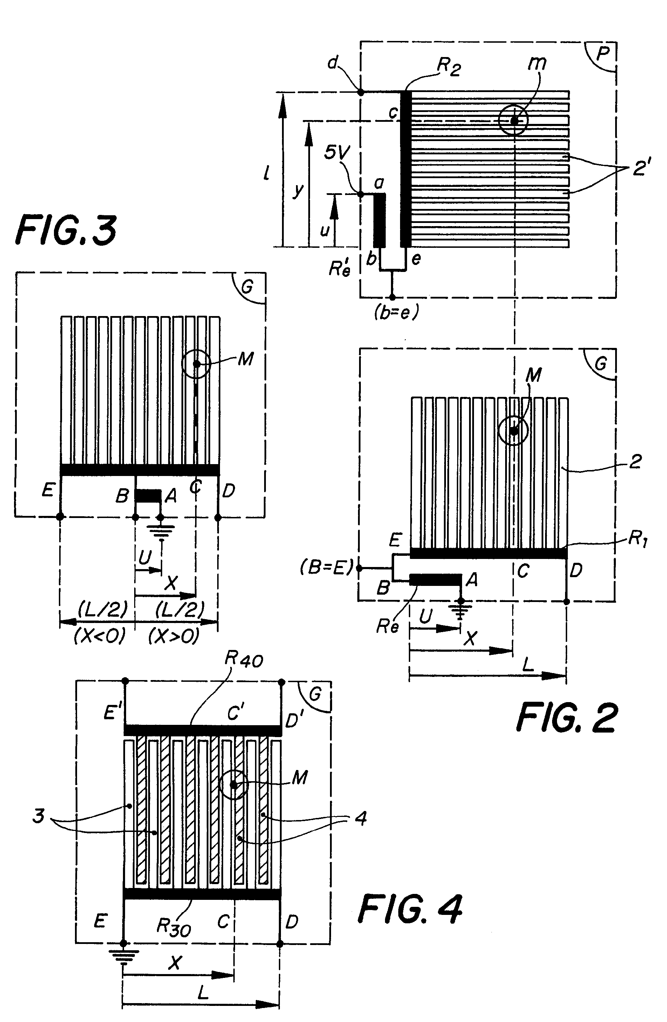

La variante d'exécution de la fig. 2 se distingue de celle de la figure 1 essentiellement en ce que la tablette est formée par assemblage de deux substrats P et G dans lequel le substrat supérieur P, dont on rappellera qu'il est constitué par une feuille de matériau souple, porte, lui aussi, un ensemble de conducteurs parallèles 2', rattachés, par une extrémité, à une résistance collectrice $R_2$ à laquelle est associée une résistance étalon $R'_e$. Comme on le voit au dessin, les conducteurs 2' s'étendent perpendiculairement aux conducteurs portés par le substrat G. Des organes de distancement identiques à ceux décrits en se référant à la figure 1$\underline{a}$ et disposés par exemple sur la face inférieure de P de la même manière, assurent le positionnement réciproque des deux substrats P et G et, partant, celui de leur réseau respectif de conducteurs.

Dans cette variante d'exécution, c'est l'extrémité libre de la résistance de mesure $R'_e$ qui est portée au potentiel de référence, par exemple 5 volts, alors que l'extrémité libre de la résistance $R_e$ du substrat G sera mise à la masse.

Bien entendu, la mise en oeuvre de la tablette illustrée donnerait des résultats identiques si on mettait à la masse la résistance $R'_e$ et si on portait la résistance $R_e$ au potentiel de 5 Volts.

Dans les conditions ci-dessus, la valeur de l'abscisse x de tout point M de la tablette sur lequel un usager aura appliqué le doigt sera donnée , comme dans le cas de la variante de la figure 1, par la relation

$$\frac{x}{L} = k \cdot \frac{(D - E)}{(B - A)} \qquad \text{avec } k = \frac{U}{L} \text{ connu}$$

Pareillement, la valeur de l'ordonnée y sera

$$\frac{y}{l} = k' \cdot \frac{(d - e)}{(b - a)} \qquad \text{avec } k' = \frac{u}{l} \text{ connu}$$

dans laquelle k' est le rapport connu (constitutif de la tablette) entre la longueur u de la résistance étalon $R'_e$ et la longueur l de la résistance collectrice $R_1$.

La précision de mesure du dispositif illustré sera optimale si les longueurs U et u des résistances $R_e$ et $R'_e$ et, partant, leurs valeurs ohmiques, seront choisies égales à la moitié des longueurs L et l des résistances collectrices respectives, $R_1$ et $R_2$, et donc de la valeur ohmique de celles-ci. En pratique, en fonction de la précision acceptable on pourra réaliser des tablettes avec des résistances étalon de longueurs non inférieures à 0,2 fois les longueurs des résistances collectrices respectives.

Il convient de relever qu'il n'est pas nécessaire que la résistance étalon $R_e$, respectivement $R'_e$, dont il à été fait usage dans les exécutions des figs 1 et 2 décrites, soit forcément branchée à une extrémité de la résistance collectrice correspondante $R_1$, respectivement $R_2$.

En effet, et selon une particularité essentielle de la présente invention, la résistance étalon pourra être reliée en un point quelconque de la longueur de la résistance collectrice qui lui est associée, étant entendu que la valeur mesurée, en abscisse ou en ordonnée, de la distance du point d'actionnement de la tablette le sera à partir du point de connexion de la résistance étalon sur la résistance collectrice, ce point devant être considéré comme étant l'origine du système de mesure. Le résultat de celle-ci pourra être positif ou négatif, ce qui indiquera si le point dont on recherche les coordonnées sera situé par exemple à droite ou à gauche de l'origine (au dessin). La fig. 3 illustre précisément une telle variante d'exécution dans laquelle la résistance étalon est rattachée au point milieu de la résistance collectrice.

Dans un tel cas, on peut démontrer que, comme auparavant, le rapport x/L entre la distance x comprise entre l'origine du système de mesure (correspondant au point de branchement mutuel de la résistance étalon de longueur U et de la résistance collectrice de longueur L/2), et la longueur L, est égale à deux fois le quotient de la différence de potentiel mesurée aux extrémités de la résistance collectrice (D-E) par la différence de potentiel mesurée aux extrémités de la résistance étalon (B-A), le tout multiplié par le rapport connu

$$k = \frac{U}{L}$$

$$\frac{x}{(L/2)} = 2 \cdot \frac{x}{L} = 2k \cdot \frac{(D - E)}{(B - A)} \qquad (\text{avec } k = \frac{U}{L})$$

On se référera aux notations de la fig. 3 pour plus de détails. On voit que ce montage double la sensibilité de mesure de X.

Comme auparavant, la longueur U optimum de la résistance étalon sera égale à la moitié de la longueur utilisée L/2 de la résistance collectrice c'est-à-dire U = L/4. En pratique, en fonction de la précision acceptable, cette résistance étalon pourra présenter une longueur U non inférieure à 0,1 fois la longueur L de la résistance collectrice.

La forme d'exécution de la fig. 4, dont on n'a illustré que le substrat inférieur G d'une tablette, porte deux ensembles de conducteurs parallèles 3 et 4 imbriqués deux à deux, sans contact d'ensemble à ensemble, mais rattachés à des résistances collectrices propres $R_{30}$, pour les conducteurs 3, et $R_{40}$, pour les conducteurs 4. Les résistances $R_{30}$ et $R_{40}$ sont de même longueur, de même résistivité spécifique par unité de longueur et de valeur variant linéairement sur toute leur longueur: elles présentent donc une valuer ohmique globale identique de résistance à résistance.

Elles peuvent être réalisées, comme dans le cas des exécutions déjà illustrées, par un revêtement de carbone, par exemple déposé à même la surface du substrat portant les conducteurs 2 et 3, substrat dont on rappellera qu'il peut être constitué en verre, en un matériau plastique etc, de densité ou de souplesse variables selon les besoins.

La mise en oeuvre de cette forme d'exécution s'effectue en branchant à la masse par exemple l'extrémité gauche de la résistance $R_{30}$ et en appliquant un potentiel, par exemple de 5 Volts, à l'extrémité droite de la résistance $R_{40}$. Si, par un moyen quelconque, on relie électriquement un conducteur 4 proche du point M et le conducteur 3 adjacent, comme le valeur du courant circulant entre l'extrémité droite de la résistance $R_{40}$ et le point M est la même que celle circulant entre ce même point et l'extrémité gauche de la résistance $R_{30}$, on peut démontrer que la valeur x de l'abscisse du point M sera égale à

$$\frac{x}{L} = \frac{(D - E)}{(D - E) + (D' - E')}$$

relation dans laquelle

E est le potentiel à l'extrémité gauche de la résistance $R_{30}$,

E' le potentiel à l'extrémité gauche de la résistance $R_{40}$,

D le potentiel à l'extrémité droite de la résistance $R_{30}$

D' le potentiel à l'extrémité droite de la résistance $R_{40}$,

Par analogie avec ce qui a déjà été expliqué précédemment en se référant notamment aux figures 1 et 2, on voit que, dans cette variante, la résistance étalon est de valeur variable avec l'abscisse du point M et est constituée par le segment de la résistance $R_{40}$ compris entre le point de cette résistance auquel est rattaché le conducteur 3 relié à ce point M, au conducteur 4 le plus voisin qui est rattaché à son tour à la résistance $R_{40}$ et l'extrémité droite de cette dernière à laquelle est appliqué le potentiel de 5 volts par exemple.

A titre d'exemple, on signalera que le contact au point M entre conducteurs voisins 3 et 4 pourrait être réalisé simple ment en recouvrant l'extrémité du doigt de l'usager d'un revêtement conducteur qui pourrait être constitué par un feuillet métallique ou une pâte conductrice. On pourrait également faire usage d'un crayon à extrémité métallique suffisamment large pour embrasser et toucher à la fois deux conducteurs 3 et 4 voisins, ou d'une membrane qui devient localement conductrice dans la zone où on la comprime.

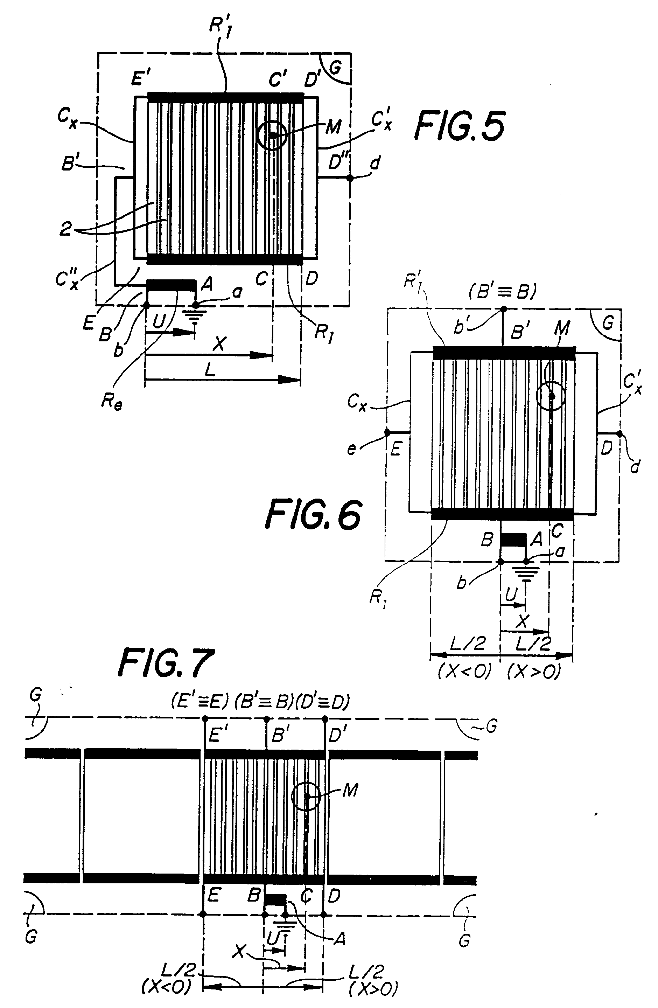

Dans la variante d'exécution de la fig. 5, le dispositif selon l'invention comporte un ensemble de conducteurs parallèles 2 dont les extrémités sont rattachées en des points distincts de deux résistances collectrices $R_1$ et $R_1'$ respectivement, de même longueur, de même valeur ohmique globale et présentant une résistivité spécifique par unité de longueur identique et constante. Les extrémités homologues de chaque - résistance $R_1$ et $R_e$ sont rattachées deux à deux par des connections $c_x$ et $c_x'$, de résistance négligeables puisque présentant une résistivité spécifique linéaire par exemple 1000 fois plus faible que celle des résistances $R_1$ et $R_1'$. Ces connections peuvent être réalisées avec de la peinture d'argent; les résistances collectrices peuvent être réalisées de même manière que dans le cas des variantes précédentes.

A mi-longueur des connections $c_x$ et $c_x'$, le dispositif représenté comporte, d'une part, une borne $\underline{d}$, pour la connection $c_x'$ et, d'autre part, une connection $c_x''$ de résistance également négligeable, pour la connection $c_x$, rattachant cette dernière à l'extrémité gauche, au dessin, d'une résistance étalon $R_e$. Celle-ci est, en outre rattachée, par cette extrémité gauche, à une borne $\underline{b}$ et, par son autre extrémité, à une borne $\underline{a}$. Les résistances $R_1$ et $R_1'$ présentent une longueur L et la résistance $R_e$ une longueur U. Dans le cas d'espèce, le dispositif décrit est mis à un potentiel A nul sur la borne $\underline{a}$.

Si un potentiel est appliqué au point M du dispositif décrit, il s'ensuit que le potentiel à l'extrémité gauche de la résistance $R_e$ est égal au potentiel existant à l'extrémité gauche des résistances $R_1$ et $R_1'$. Le potentiel à l'extrémité droite de ces mêmes résistances est identique de résistance à résistance. Il découle de ce qui précède que l'abscisse x du point M pourra être obtenue à partir de la relation

$$\frac{x}{U} = 2k \cdot \frac{(D - E)}{(B - A)} \qquad \text{avec } k = \frac{U}{L} \text{ connu}$$

où (D - E) est égale à la différence de potentiel mesurable entre les extrémités des résistances $R_1$ et $R_1'$ et (B - A) la différence de potentiel entre les extrémités de la résistance étalon $R_e$. On voit que ce montage double la sensibilité de mesure de X. La valeur optimale de U sera U = L/4.

La variante de la fig. 6 diffère de celle représentée sur la fig. 5 en ce que la résistance étalon $R_e$ est branchée au point milieu des résistances collectrices $R_1$ et $R_1'$, les bornes b et b' étant reliées par une connection de résistivité négligeable, non représentée. Cette connection peut être réalisée de même manière que la connection $c_x$.

Le dispositif présente en outre une borne $\underline{e}$ à mi-longueur de la connection $c_x$ et une borne d à mi-longueur de la connection $c_x'$.

Si l'on porte la borne $\underline{a}$ de la résistance étalon à un potentiel A=0 et le point M à un potentiel quelconque, supérieur à 0, la distance comprise entre le point d'intersection du conducteur 2 passant par ce point M avec la résistance $R_1$ (de largeur L) et l'extrémité gauche de la résistance $R_e$ (de longueur U), sera donnée par la relation

$$\frac{x}{L} = 4k \cdot \frac{(D - E)}{(B - A)} \qquad \text{avec } k = \frac{U}{L} \text{ connu}$$

où (D - E) est égale à la différence de potentiel mesurable entre les bornes $\underline{d}$ et $\underline{e}$ soit, en définitive, entre les extrémités opposées des résistances collectrices $R_1$ et $R_1'$, alors que (B - A) est égale à la différence de potentiel comprise entre les bornes b et a, soit celle existant entre les extrémités de la résistance étalon $R_2$. On voit que ce montage quadruple la sensibilité de mesure de X: dans ce cas, la valeur optimale de U sera U = L/8. Comme on le voit sur la fig. 7, un dispositif du type décrit en se référant à la fig. 6 peut être intégré aux côtés d'autres dispositifs similaires pour former une tablette composite dont la précision de mesure globale sera particulièrement élevée puisque l'erreur moyenne de mesure pourra être maintenue à sa valeur minimum dans chaque dispositif pris isolément, de longueur correspondant à $1/n^e$ de celle de l'ensemble des dispositifs de la tablette.

Il convient, à ce point, de relever que, de façon générale, une tablette selon l'invention peut aussi être constituée par l'assemblage de deux dispositifs parmi ceux décrits précédemment même s'ils présentent une structure différente, de dispositif à dispositif. Il serait par exemple possible de combiner un dispositif du genre visible sur la fig. 1$\underline{a}$, porté par un substrat relativement rigide, avec un dispositif du genre illustré sur la fig 5, porté par un substrat flexible, sur lequel l'usager pourrait appliquer ses doigts lors de l'actionnement de la tablette et obtenir les coordonnées (x,y) correspondantes; ce substrat flexible portera un faisceau de conducteurs (2) orientés perpendiculairement à ceux portés par le substrat rigide, et des organes de distancement S (fig 1b) séparant les deux faisceaux de conducteurs. Tout autre combinaison de dispositifs parmi ceux décrits serait évidemment possible sans sortir pour autant du cadre de l'invention.

Dans la description qui précède et sur les dessins auxquels elle se réfère, il a été essentiellement question de dispositifs dans lesquels la ou les résistances collectrices et la résistance étalon étaient toutes formées sur le même substrat et étaient constituées individuellement par une couche résistante de carbone, par exemple, présentant, de préférence, une résistivité spécifique par unité de longueur identique pour toutes ces résistances. On a notamment relevé que, au cas où cette résistivité n'était pas identique entre les résistances collectrices et la résistance étalon, il conviendrait de tenir compte de ce fait, comme nous allons le préciser ci-après, par l'introduction de coefficients de correction $k$ et $k_1$ dépendant directement du type spécifique de défaut d'identité (section, résistivité etc).

Rappelons tout d'abord qu'il est possible d'éviter ces coéfficients lorsqu'on fait en sorte que, pour chaque dispositif pris isolément, la résistivité spécifique par unité de longueur des résistances étalon, $R_e$, et collectrice $R_1$, soit identique car, dans un tel cas, il ne sera pas nécessaire de procéder à un étalonnage de la résistance collectrice $R_1$ de chaque dispositif puisque les résultats de mesure obtenus avec divers dispositifs seront identiques pour tous les dispositifs même s'ils appartiennent à des lots de fabrication dans lesquels cette résistance spécifique n'est pas la même pour tous les dispositifs, à la seule condition que le rapport géométrique $k$ des longueurs U/L de la résistance étalon $R_e$ et de la résistance collectrice $R_1$ soit le même pour tous les dispositifs. Il en est de même pour le rapport $k' = u/l$ de la figure 2.

Par contre si, au prix d'une complication du montage électrique, on accepte des coéfficents de correction, il n'est pas indispensable que la résistance étalon soit intégrée au dispositif lui-même : elle peut fort bien être portée par un autre substrat que celui du reste du dispositif dont elle fait partie. Elle pourrait aussi présenter une constitution très différente de celle de la ou des résistances collectrices du dispositif: il suffit, en effet, que sa valeur étalon soit connue par rapport à celle de la résistance collectrice à laquelle sont associés les conducteurs parmi lesquels on voudra connaître une position (x ou y) relativement à une origine qu'on pourra fixer arbitrairement sur cette résistance collectrice, les corrections requises par le choix de cette origine pouvant être effectuées automatiquement par l'organe de calcul électronique auquel serait rattachée la tablette selon l'invention.

Ainsi, selon une variante d'exécution, on peut simplifier la réalisation des tablettes constituées, comme décrit précédemment (voir figure 2), de deux dispositifs superposés pour mesurer respectivement les deux coordonnées x et y; il suffit de n'utiliser, pour l'ensemble des deux dispositifs superposés, qu'une seule et même résistance étalon $R_e$. Celle-ci pourra être constituée par une résistance électrique de type classique raccordée en série avec la résistance collectrice $R_1$ (voir $R'_1$) de l'un des deux dispositifs superposés. Le valeur de cette résistance $R_e$ pourra être comprise entre celles des résistances $R_e$ et $R'_e$ précédemment décrites pour les deux dispositifs superposés; on utilisera par exemple, une résistance $R_e$ de valeur proche du 1/4 de la somme des résistances collectrices $R_1$ du dispositif mesurant X et $R_2$ du dispositif mesurant Y.

Il suffira alors d'étalonner, par rapport à $R_e$, ces deux résistances collectrices $R_1$ et $R_2$ en établissant le rapport des différences de potentiel mesurées aux extrémités de chacune de ces résistances mises sous tension en série avec $R_e$.

Soit (figure 2) $E_o - A_o$ la différence de potentiel aux extrémités de $R_e$ et $D_o - E_o$ celle aux extrêmités de $R_1$ en série avec $R_e$. L'étalonnage permet d'obtenir la valeur suivante du coéfficient $k$ :

$$k = \frac{E_o - A_o}{D_o - E_o}$$

En opérant de même pour le deuxième substrat, on obtient la valeur de $k'$ :

$$k' = \frac{e_o - a_o}{d_o - e_o}$$

Ces deux valeurs d'étalonnage $k$ et $k'$ caractérisant chaque tablette constituée de deux dispositifs superposés peuvent être obtenues par exemple lors de la fabrication des tablettes ou encore, au moyen de l'organe de calcul électronique situé à l'intérieur des appareils qui incorporent une telle tablette, au cours des procédures d'initialisation de chaque appareil. On peut réaliser cette électronique de façon à raccorder en série (juste pendant la période d'étalonnage) $R_1$ et $R_2$, elles-mêmes raccordées avec $R_e$, la liaison $R_1$, $R_2$ étant supprimée en dehors de l'étalonnage. Dans ce cas, la valeur $(e_o - a_o)$ étant égale à celle de $(E_o - A_o)$, on peut ainsi éviter l'une de ces deux mesures.

Les valeurs recherchées X/L et Y/l sont obtenues par les mêmes formules précédemment données en se référant aux exécutions des figures 1c, 2, 3, 5, 6, 7, à condition de remplacer les valeurs des coéfficients $k = U/L$ et $k' = u/l$ par les valeurs $k$ et $k'$ données ci-dessus.

Cette modification des expressions des coéfficients $k$ et $k'$ montre que la présente procédure revient à substituer des mesures électriques de tensions aux mesures mécaniques de longueurs des résistances correspondantes.

Les tablettes décrites peuvent aussi bien être opaques que transparentes en fonction des matériaux utilisés pour les réaliser. Lorsqu'elles sont transparentes, on peut les utiliser en recouvrement d'écrans de visualisation, par exemple pour sélectionner, par pression du doigt, toutes sortes d'options présentées par l'écran d'un ordinateur, sous forme de messages alphanumériques et graphiques, ou encore pour introduire dans des ordinateurs des tracés que l'on effectue sur ces tablettes au moyen d'un stylet ou du doigt. Bien entendu, l'usage de telles tablettes n'est pas limité à la saisie de données pour des ordinateurs mais peut s'étendre à des applications aussi diverses que la sélection de numéros, d'adresses téléphoniques, la constitution de tableaux de commande de toute sorte, etc.

## Revendications

1. Dispositif pour localiser la position inconnue d'un conducteur électrique déterminé appartenant à un faisceau de conducteurs distincts (2) de résistivités quelconques indéterminées, le dispositif comprenant le faisceau de conducteurs, chaque conducteur dudit faisceau étant branché, par une première extrémité, en un point distinct d'une première résistance collectrice ($R_1$), de valeur ohmique constante par unité de longueur; des premiers moyens ($b_1$, $b_2$) pour déterminer la valeur d'une première différence de potentiel (D - E), apparaissant entre les extrémités de ladite résistance collectrice ($R_1$), lorsque ledit conducteur électrique de position inconnue est porté à un potentiel; et des seconds moyens pour déterminer la valeur de la distance (X) séparant le point de branchement (C'), sur ladite résistance collectrice ($R_1$), dudit conducteur électrique de position inconnue et un point "origine" prédéfini sur la résistance collectrice, le dispositif étant caractérisé par le fait qu'il comprend une résistance étalon ($R_e$), de même valeur ohmique par unité de longueur que celle de ladite résistance collectrice ($R_1$), cette résistance étalon étant branchée en un point de la résistance collectrice par une première extrémité; des troisièmes moyens ($b_2$, $b_3$) pour déterminer la valeur d'une seconde différence de potentiel (B - A), apparaissant entre les extrémités de ladite résistance étalon ($R_e$) lorsque ledit conducteur électrique de position inconnue et la seconde extrémité de la résistance étalon sont portés à des potentiels respectifs, de valeur différant de l'un à l'autre, et par le fait que les seconds moyens déterminent la valeur de la distance (X) séparant le point de branchement (C'), sur ladite résistance collectrice ($R_1$), dudit conducteur électrique de position inconnue et un point "origine" prédéfini sur la résistance collectrice, en fonction, d'une part, du rapport entre la longueur (L) de la résistance collectrice et la longueur (U) de ladite résistance étalon ($R_e$) et, d'autre part, du rapport entre la valeur de ladite première différence de potentiel (D - E) et la valeur de ladite seconde différence de potentiel (B - A).

2. Dispositif pour localiser la position inconnue d'un conducteur électrique déterminé appartenant à un faisceau de conducteurs distincts (3,4) de résistivités quelconques indéterminées, le dispositif comprenant le faisceau de conducteurs ; une première résistance collectrice ($R_{30}$), de valeur ohmique constante par unité de longueur, des premiers moyens (D,E) pour déterminer la valeur d'une différence de potentiel (D - E), apparaissant entre les extrémités de ladite résistance collectrice ($R_{30}$), lorsque ledit conducteur électrique de position inconnue est porté à un potentiel; et des seconds moyens pour déterminer la valeur de la distance (X) séparant le point de branchement (C), sur ladite résistance collectrice ($R_{30}$), dudit conducteur électrique de position inconnue et un point "origine" prédéfini sur la résistance collectrice, le dispositif étant caractérisé par le fait qu'il comprend une résistance étalon constituée par au moins une partie de la longueur d'une résistance tierce ($R_{40}$), de structure identique à celle de la première résistance collectrice ($R_{30}$) et s'étendant à distance de cette première résistance collectrice, à proximité de la seconde extrémité des conducteurs dudit faisceau de conducteurs, lesdits conducteurs étant rattachés, individuellement et alternativement, en des points distincts de ladite première résistance collectrice, ($R_{30}$) par ladite première extrémité, et en des points distincts de ladite résistance tierce ($R_{40}$), par leur seconde extrémité, chaque conducteur dudit faisceau de conducteurs branché à l'une desdites résistances, collectrice ou tierce, étant ainsi adjacent à au moins un autre conducteur du faisceau, branché à l'autre desdites résistances, tierce ou collectrice, et par le fait que lesdits premiers moyens (D,E, D',E') sont agencés de manière à déterminer la valeur de la différence de potentiel apparaissant tant entre les extrémités de la première résistance collectrice ($R_{30}$) qu'entre celles de la résistance tierce ($R_{40}$), lorsque l'une des extrémités de la première résistance collectrice ($R_{30}$) et l'extrémité opposée de ladite résistance tierce ($R_{40}$) sont portées à des potentiels de référence respectifs, de valeur différant de résistance à résistance, et qu'un contact électrique est établi entre un conducteur de position inconnue (X) et un conducteur adjacent dudit faisceau de conducteurs, et par le fait que les seconds moyens déterminent la position inconnue (X) des valeurs de différence de potentiel (D - E, D' - E') déterminées par ledits premiers moyens.

3. Dispositif selon la revendication 1, caractérisé par le fait qu'il comprend une seconde résistance collectrice (R$_1$'), de structure identique à celle de ladite première résistance collectrice (R$_1$), lesdits conducteurs (2) étant branchés individuellement, par un second point, en des points distincts correspondants de ladite seconde résistance, et par le fait que ladite résistance étalon (R$_e$) est branchée, par l'une de ses extrémités, en un point homologue de chaque résistance collectrice (R$_1$, R$_1$'), des liaisons galvaniques (c$_x$, c$_x$'), de valeur résistive négligeable par rapport à la valeur résistive desdites résistances, collectrices et étalon, reliant les extrémités homologues des résistances collectrices (R$_1$, R$_1$').

4. Dispositif selon la revendication 1, caractérisé par le fait que la résistance étalon (R$_e$) est branchée à l'une des extrémités de la résistance collectrice (R$_1$).

5. Dispositif selon la revendication 3, caractérisé par le fait que la résistance étalon (R$_e$) est branchée à l'une des extrémités des résistances collectrices (R$_1$,R$_1$').

6. Dispositif selon la revendication 1, caractérisé par le fait que la résistance étalon est branchée à mi-longueur de la résistance collectrice.

7. Dispositif selon la revendication 3, caractérisé par le fait que la résistance étalon est branchée à mi-longueur des résistances collectrices (R$_1$,R$_1$').

8. Dispositif selon la revendication 1, caractérisé par le fait qu'il comprend des quatrièmes moyens (R$_e$/R$_1$) fixant la valeur du degré de précision de la localisation dudit conducteur électrique de position inconnue.

9. Dispositif selon les revendications 4 et 8, caractérisé par le fait que la valeur de ladite résistance étalon est au moins égale à 0,2 fois celle de ladite résistance collectrice.

10. Dispositif selon la revendication 5, caractérisé par le fait que la valeur de ladite résistance étalon est au moins égale à 0,2 fois celle desdites résistances collectrices.

11. Dispositif selon les revendications 6 et 8, caractérisé par le fait que la valeur de ladite résistance étalon est au moins égale à 0,1 fois celle de ladite résistance collectrice.

12. Dispositif selon la revendication 7, caractérisé par le fait que la valeur de ladite résistance étalon est au moins égale à 0,1 fois celle desdites résistances collectrices.

13. Utilisation d'un premier et d'un second dispositif selon l'une quelconque des revendications précédentes, dans une tablette sensible au toucher pour la saisie d'informations, cette tablette comprenant un premier (P) et un second (G) substrats qui sont superposés et dont au moins l'un (P) est en matériau flexible et élastique, le premier substrat (P) portant un premier faisceau (2') de conducteurs et le second substrat (G) un second faisceau (2) de conducteurs, chaque conducteur de l'un desdits faisceaux de conducteurs croisant, une et une seule fois, tous les conducteurs de l'autre faisceau de conducteurs, des organes de distancement (S) des substrats (P,G) maintenant les conducteurs de chaque faisceau distants de ceux de l'autre faisceau, dans une position de repos du substrat en matériau flexible et élastique, utilisation caractérisée par le fait que le premier substrat (P) de la tablette, respectivement le second substrat (G), porte au moins la résistance collectrice (R$_2$) dudit premier dispositif, respectivement au moins la résistance collectrice (R$_e$) dudit second dispositif.

14. Utilisation selon la revendication 13, caractérisée par le fait que la résistance étalon (R$_e$') du premier dispositif, respectivement la résistance étalon (R$_e$) du second dispositif, est constituée par un revêtement ohmique formé sur ledit premier substrat (P), respectivement sur ledit second substrat (G).

15. Utilisation selon la revendication 13, caractérisée par le fait que lesdits premier et second dispositifs présentent une résistance étalon (Re) qui leur est commune et qui est constituée par un revêtement ohmique formé sur l'un desdits premier et second substrats, ladite résistance étalon étant branchée en un point de la résistance collectrice (R$_1$ ou R$_1$') de l'un desdits premier ou second dispositifs.

16. Utilisation selon la revendication 15, caractérisée par le fait que la résistance étalon (R$_e$) est branchée en série avec ladite résistance collectrice (R$_1$ ou R$_2$).

17. Utilisation selon la revendication 16, caractérisée par le fait que la valeur ohmique de la résistance étalon est sensiblement égale à 1/4 de la somme des valeurs ohmiques des résistances collectrices (R$_1$, R$_2$) desdits premier et second dispositifs.

18. Utilisation selon la revendication 13, caractérisée par le fait que lesdits organes de distancement sont formés par des bâtonnets (S) solidaires de l'un et/ou de l'autre desdits premier et second substrats (P,G), leur axe longitudinal étant orienté parallèlement aux conducteurs d'au moins l'un desdits premier et second faisceaux de conducteurs et l'épaisseur de ces bâtonnets étant inférieure ou égale à leur largeur, elle-même inférieure ou égale à leur longueur.

**Patentansprüche**

1. Vorrichtung zum Lokalisieren der unbekannten Position eines bestimmten elektrischen Leiters, der einem Bündel getrennter Leiter (2) unbestimmten, beliebigen Widerstandes angehört, aufweisend: das Leiterbündel, bei dem jeder Leiter des Bündels mit einem ersten Ende an einen bestimmten Punkt eines ersten Sammelwiderstandes (R1) mit konstantem ohm'schen Widerstand je Längeneinheit angeschlossen ist, erste Mittel ($b_1$, $b_2$) zum Bestimmen des Wertes einer ersten Potentialdifferenz (D-E), die zwischen den Enden des genannten Sammelwiderstandes ($R_1$) auftritt, wenn der elektrische Leiter unbekannter Position auf ein Potential gebracht wird, und zweite Mittel zum Bestimmen des Wertes des Abstandes (X), der den Anschlußpunkt (C') des elektrischen Leiters unbekannter Position am genannten Sammelwiderstand ($R_1$) und einen auf dem Sammelwiderstand vordefinierten "Ursprungspunkt" trennt, dadurch **gekennzeichnet**, daß die Vorrichtung aufweist: einen Normalwiderstand ($R_e$) mit dem gleichen ohm'schen Wert je Längeneinheit wie dem des genannten Sammelwiderstandes ($R_1$), wobei dieser Normalwiderstand mit einem ersten Ende an einen Punkt des Sammelwiderstandes angeschlossen ist; dritte Mittel ($b_2$, $b_3$) zum Bestimmen des Wertes einer zweiten potentialdifferenz (B-A), die zwischen den Enden des Normalwiderstandes ($R_e$) erscheint, wenn der genannte elektrische Leiter unbekannter Position und das zweite Ende des Normalwiderstandes auf entsprechende Potentiale unterschiedlichen Wertes gebracht werden; und dadurch gekennzeichnet, daß die zweiten Mittel den Wert des Abstandes (X) bestimmen, der den Anschlußpunkt (C') des elektrischen Leiters unbekannter Position auf dem genannten Sammelwiderstand ($R_1$) des elektrischen Leiters unbekannter Position und einen auf dem Sammelwiderstand vordefinierten "Ursprungspunkt", und zwar in Abhängigkeit einerseits vom Verhältnis zwischen der Länge (L) des Sammelwiderstandes und der Länge (U) des Normalwiderstandes ($R_e$), und andererseits vom

Verhältnis zwischen dem Wert der ersten Potentialdifferenz (D-E) und dem Wert der zweiten Potentialdifferenz (B-A), trennt.

2. Vorrichtung zum Lokalisieren der unbekannten Position eines bestimmten elektrischen Leiters, der einem Bündel getrennter Leiter (3, 4) unbestimmten, beliebigen Widerstandes angehört, wobei die Vorrichtung aufweist: das Leiterbündel; einen ersten Sammelwiderstand ($R_{30}$) mit konstantem, ohm'schen Wert je Längeneinheit; erste Mittel (D, E) zum Bestimmen des Wertes einer ersten Potentialdifferenz (D-E), die zwischen den Enden des genannten Sammelwiderstandes ($R_{30}$) auftritt, wenn der elektrische Leiter unbekannter Position auf ein Potential gebracht wird; und zweite Mittel zum Bestimmen des Wertes des Abstandes (X), der den Anschlußpunkt (C) auf dem genannten Sammelwiderstand ($R_{30}$) des elektrischen Leiters unbekannter Position und einen auf dem Sammelwiderstand vordefinierten "Ursprungspunkt" trennt, dadurch **gekennzeichnet**, daß die Vorrichtung einen Normalwiderstand aufweist, der aus mindestens einem Teil der Länge eines weiteren, dritten Widerstandes ($R_{40}$) besteht, mit einer Struktur, die mit derjenigen des ersten Sammelwiderstandes ($R_{30}$) identisch ist, und der sich im Abstand vom ersten Sammelwiderstand in der Nähe des zweiten Endes der Leiter des genannten Leiterbündels erstreckt, wobei diese Leiter, individuell und alternierend, mit dem ersten Ende an getrennte Punkte des ersten Sammelwiderstandes ($R_{30}$) und mit dem zweiten Ende an getrennte Punkte des dritten Widerstandes ($R_{40}$) angeschlossen sind, wobei so jeder Leiter des genannten Leiterbündels, der an einen dieser Widerstände, den Sammelwiderstand oder den dritten Widerstand angeschlossen ist, mindestens einem anderen Leiter des Bündels, der an den anderen der genannten Widerstände, den dritten Widerstand oder den Sammelwiderstand angeschlossen ist, benachbart ist; und dadurch gekennzeichnet, daß die ersten Mittel (D, E, D', E') so angeordnet sind, daß sie den Wert der Potentialdifferenz, die einesteils zwischen den Enden des ersten Sammelwiderstandes ($R_{30}$), andernteils zwischen denen des dritten Widerstandes ($R_{40}$) auftritt, bestimmen, wenn eines der Enden des ersten Sammelwiderstandes ($R_{30}$) und das entgegengesetzte Ende des dritten Widerstandes ($R_{40}$) auf entsprechende Bezugspotentiale mit einem von Widerstand zu Widerstand unterschiedlichen Wert gebracht werden, und daß ein elektrischer Kontakt zwischen einem Leiter unbekannter Position (X) und einem benachbarten Leiter des genannten Leiterbündels hergestellt wird; und dadurch gekennzeichnet, daß die zweiten Mittel die unbekannte Position (X) der Potentialdifferenzwerte (D-E, D'-E') bestimmen, welche durch die ersten Mittel bestimmt werden.

3. Vorrichtung nach Anspruch 1, dadurch **gekennzeichnet**, daß sie einen zweiten Sammelwiderstand ($R_1'$) mit einer Struktur aufweist, die derjenigen des ersten Sammelwiderstandes ($R_1$) entspricht, wobei die genannten Leiter (2) individuell durch einen zweiten Punkt an entsprechenden getrennten Punkten des genannten zweiten Widerstandes angeschlossen sind; und dadurch gekennzeichnet, daß der genannte Normalwiderstand ($R_e$) mit einem seiner Enden an einen homologen Punkt jedes Sammelwiderstandes ($R_1$, $R_1'$) angeschlossen ist, wobei galvanische Verbindungen (cx, $c_x'$) mit einem Widerstandswert, der im Vergleich zum Widerstandswert der genannten Widerstände, der Sammelwiderstände oder des Normalwiderstandes, vernachlässigbar ist, die homologen Enden der Sammelwiderstände ($R_1$, $R_1'$) verbinden.

4. Vorrichtung nach Anspruch 1, dadurch **gekennzeichnet**, daß der Normalwiderstand ($R_e$) an eines der Endes des Sammelwiderstandes ($R_1$) angeschlossen ist.

5. Vorrichtung nach Anspruch 3, dadurch **gekennzeichnet**, daß der Normalwiderstand ($R_e$) an eines der Endes der Sammelwiderstände ($R_1$, $R_1'$) angeschlossen ist.

6. Vorrichtung nach Anspruch 1, dadurch **gekennzeichnet**, daß der Normalwiderstand auf halber Länge des Sammelwiderstandes angeschlossen ist.

7. Vorrichtung nach Anspruch 3, dadurch **gekennzeichnet**, daß der Normalwiderstand auf halber Länge der Sammelwiderstände ($R_1$, $R_1'$) angeschlossen ist.

8. Vorrichtung nach Anspruch 1, dadurch **gekennzeichnet**, daß sie vierte Mittel ($R_e$, $R_1$) aufweist, die den Wert des Genauigkeitsgrades der Lokalisierung des elektrischen Leiters unbekannter Position bestimmen.

9. Vorrichtung nach den Ansprüchen 4 und 8, dadurch **gekennzeichnet**, daß der Wert des Normalwiderstandes mindestens dem 0,2-fachen desjenigen des genannten Sammelwiderstandes entspricht.

10. Vorrichtung nach Anspruch 5, dadurch **gekennzeichnet**, daß der Wert des Normalwiderstandes mindestens dem 0,2-fachen desjenigen der genannten Sammelwiderstände entspricht.

11. Vorrichtung nach den Ansprüchen 6 und 8, dadurch **gekennzeichnet**, daß der Wert des Normalwiderstandes mindestens dem 0,1-fachen desjenigen des genannten Sammelwiderstandes entspricht.

12. Vorrichtung nach Anspruch 7, dadurch **gekennzeichnet**, daß der Wert des Normalwiderstandes mindestens dem 0,1-fachen desjenigen der genannten Sammelwiderstände entspricht.

13. Verwendung einer ersten und einer zweiten Vorrichtung nach irgendeinem vorhergehenden Anspruch in einem berührungsempfindlichen Tablett zum Erfassen von Informationen, wobei das Tablett ein erstes (P) und ein zweiten (G) Substrat aufweist, die übereinander angebracht sind, und von denen mindestens das eine (P) aus einem flexiblen und elastischen Material besteht, wobei das erste Substrat (P) ein erstes Leiterbündel (2') und das zweite Substrat (G) ein zweites Leiterbündel (2) trägt, wobei jeder Leiter des einen der genannten Leiterbündel nur ein einziges Mal sämtliche Leiter des anderen Leiterbündels kreuzt, wobei Abstandselemente (S) der Substrate (P, G) die Leiter jedes Bündels gegenüber denen des anderen Bündels in der Ruhelage des Substrats aus flexiblem und elastischem Material auf Abstand halten; wobei die Verwendung dadurch gekennzeichnet ist, daß das erste Substrat (P) des Tabletts bzw. das zweite Substrat (G) mindestens den Sammelwiderstand ($R_2$) der ersten Vorrichtung bzw. mindestens den Sammelwiderstand ($R_e$) der zweiten Vorrichtung trägt.

14. Verwendung nach Anspruch 13, dadurch **gekennzeichnet**, daß der Normalwiderstand ($R_e'$) der ersten Vorrichtung bzw. der Normalwiderstand ($R_e$) der zweiten Vorrichtung aus einem ohm'schen Überzug besteht, der auf dem ersten Substrat (P) bzw. auf dem zweiten Substrat (G) gebildet ist.

15. Verwendung nach Anspruch 13, dadurch **gekennzeichnet**, daß die erste und die zweite Vorrichtung einen Normalwiderstand (Re) aufweisen, der ihnen gemeinsam ist und aus einem ohm'schen Überzug besteht, der auf dem ersten oder zweiten Substrat gebildet ist, wobei der genannte Normalwiderstand an einen Punkt des Sammelwiderstandes ($R_1$, $R_1'$) der ersten oder der zweiten Vorrichtung angeschlossen ist.

16. Verwendung nach Anspruch 15,

dadurch **gekennzeichnet**, daß der Normalwiderstand ($R_e$) mit dem Sammelwiderstand ($R_1$ oder $R_2$) in Reihe geschaltet ist.

17. Verwendung nach Anspruch 16,
    dadurch **gekennzeichnet**, daß der ohm'sche Wert des Normalwiderstandes im wesentlichen 1/4 der Summe der ohm'schen Werte der Sammelwiderstände (($R_1$, $R_2$) in der ersten und zweiten Vorrichtung entspricht.

18. Verwendung nach Anspruch 13,
    dadurch **gekennzeichnet**, daß die Abstandselemente aus Stäbchen (S) bestehen, die mit dem einen und/oder dem anderen der beiden ersten und zweiten Substrate (P, G) fest verbunden sind, wobei ihre Längsachse parallel zu den Leitern mindestens eines der beiden ersten und zweiten Leiterbündel ausgerichtet ist, und die Dicke dieser Stäbchen kleiner als ihre Breite ist oder dieser gleicht, wobei diese selbst kleiner als die Länge der Stäbchen ist oder dieser gleicht.

**Claims**

1.  A device for locating the unknown position of a determined electrical conductor belonging to a bunch of distinct conductors (2) of any undetermined resistivity, the device comprising the bunch of conductors, each conductor of the said bunch being connected by a first end at a distinct point of a first collector resistor ($R_1$), having a constant ohmic value per unit of length; first means ($b_1$, $b_2$) for determining the value of a first potential difference (D - E) occurring between the ends of the said collector resistor ($R_1$) when the said electrical conductor of unknown position is given a potential; and second means for determining the value of the distance (X) separating the connection point (C′), on the said collector resistor ($R_1$), of the said electrical conductor of unknown position from a pre-set "origin" point on the collector resistor, the device being characterized in that it comprises a standard resistor ($R_e$) of the same ohmic value per unit of length as that of the said collector resistor ($R_1$), this standard resistor being connected at a point on the collector resistor by a first end; third means ($b_2$, $b_3$) for determining the value of a second potential difference (B - A) occurring between the ends of the said standard resistor ($R_e$) when the said electrical conductor of unknown position and the second end of the standard resistor are given respective potentials differing in value from one another, and in that the second means determine the value of the distance (X) separating the connection point (C′), on the said collector resistor ($R_1$), of the said electrical conductor of unknown position from a pre-set "origin" point on the collector resistor, as a function, on the one hand, of the ratio between the length (L) of the collector resistor and the length (U) of the said standard resistor ($R_e$) and, on the other hand, of the ratio between the value of the said first potential difference (D - E) and the value of the said second potential difference (B - A).

2.  A device for locating the unknown position of a determined electrical conductor belonging to a bunch of distinct conductors (3, 4) of any undetermined resistivity, the device comprising the bunch of conductors; a first collector resistor ($R_{30}$) of constant ohmic value per unit of length, first means (D, E) for determining the value of potential difference (D - E), occurring between the ends of the said collector resistor ($R_{30}$) when the said electrical conductor of unknown position is given a potential; and second means for determining the value of the distance (X) separating the connection point (C), on the said collector resistor ($R_{30}$), of the said electrical conductor of unknown position from a pre-set "origin" point on the collector resistor, the device being characterized in that it comprises a standard resistor formed by at least part of the length of a third resistor ($R_{40}$), having an identical structure to that of the first collector resistor ($R_{30}$) and extending at a distance from this first collector resistor, close to the second end of the conductors of the said bunch of conductors, the said conductors being attached, individually and alternately, at distinct points on the said first collector resistor, ($R_{30}$) by the said first end, and at distinct points on the said third resistor ($R_{40}$), by their second ends, each conductor of the said bunch of conductors connected to one of the said resistors, either collector or third resistor, thus being adjacent to at least one other conductor of the bunch, connected to the other of the said resistors, either third or collector resistor, and in that the said first means (D, E, D′, E′) are arranged so as to determine the value of the potential difference occurring both between the ends of the first collector resistor ($R_{30}$) and between those of the third resistor ($R_{40}$) when one of the ends of the first collector resistor ($R_{30}$) and the opposite end of the said third resistor ($R_{40}$) are given respective reference potentials of a value different from resistor to resistor, and in that an electrical contact is made between a conductor of unknown position (X) and an adjacent conductor of the said bunch of conductors, and in that the second means determine the unknown position (X) of the potential difference values (D - E, D′ - E′) determined by the said first means.

3. A device according to Claim 1, characterized in that it comprises a second collector resistor ($R_1'$), having an identical structure to that of the said first collector resistor ($R_1$), the said conductors (2) being connected individually, by way of a second point, at corresponding distinct points on the said second resistor, and in that the said standard resistor ($R_e$) is connected, by way of one of its ends, at an equivalent point of each collector resistor ($R_1$, $R_1'$), with galvanic connections ($c_x$, $c_x'$), having a resistive value which is negligible with respect to the resistive value of the said resistors, collector and standard resistors, joining the equivalent ends of the collector resistors ($R_1$, $R_1'$).

4. A device according to Claim 1, characterized in that the standard resistor ($R_e$) is connected to one of the ends of the collector resistor ($R_1$).

5. A device according to Claim 3, characterized in that the standard resistor ($R_e$) is connected to one of the ends of the collector resistors ($R_1$, $R_1'$).

6. A device according to Claim 1, characterized in that the standard resistor is connected halfway along the collector resistor.

7. A device according to Claim 3, characterized in that the standard resistor is connected halfway along the collector resistors ($R_1$, $R_1'$).

8. A device according to Claim 1, characterized in that it comprises fourth means ($R_e/R_1$) establishing the value of the degree of precision of locating the said electrical conductor of unknown position.

9. A device according to Claims 4 and 8, characterized in that the value of the said standard resistor is at least equal to 0.2 times that of the said collector resistor.

10. A device according to Claim 5, characterized in that the value of the said standard resistor is at least equal to 0.2 times that of the said collector resistors.

11. A device according to Claims 6 and 8, characterized in that the value of the said standard resistor is at least equal to 0.1 times that of the said collector resistor.

12. A device according to Claim 7, characterized in that the value of the said standard resistor is at least equal to 0.1 times that of the said collector resistors.

13. The use of a first and a second device according to any one of the preceding claims, in a touch-sensitive panel for the capture of data, this panel comprising a first (P) and a second (G) substrate which are placed one above the other and whereof at least one (P) is of a flexible and resilient material, the first substrate (P) bearing a first bunch (2') of conductors and the second substrate (G) bearing a second bunch (2) of conductors, each conductor of one of the said bunches of conductors crossing, at one time only, all the conductors of the other bunch of conductors, spacer members (S) of the substrates (P, G) keeping the conductors of each bunch remote from those of the other bunch, in a rest position of the substrate of flexible and resilient material, this use being characterized in that the first substrate (P) of the panel and the second substrate (G) bear at least the collector resistor ($R_2$) of the said first device and at least the collector resistor ($R_e$) of the said second device respectively.

14. The use according to Claim 13, characterized in that the standard resistor ($R_e'$) of the first device and the standard resistor ($R_e$) of the second device are respectively formed by a resistive coating produced on the said first substrate (P) and on the said second substrate (G) respectively.

15. The use according to Claim 13, characterized in that the said first and second devices have a standard resistor (Re) which is common to them and which is formed by a resistive coating produced on one of the said first and second substrates, the said standard resistor being connected at a point on the collector resistor ($R_1$ or $R_1'$) of one of the said first or second devices.

16. The use according to Claim 15, characterized in that the standard resistor ($R_e$) is connected in series with the said collector resistor ($R_1$ or $R_2$).

17. The use according to Claim 16, characterized in that the ohmic value of the standard resistor is substantially equal to $\frac{1}{4}$ of the total of the ohmic values of the collector resistors ($R_1$, $R_2$) of the said first and second devices.

18. The use according to Claim 13, characterized in that the said spacer members are formed by bars (S) which are integrally formed with one and/or the other of the said first and second substrates (P, G), whereof the longitudinal axes are oriented parallel to the conductors of at least one of the said first and second bunches of conductors and the thickness of these bars being less than or equal to their width, which is itself less than or equal to their length.

FIG.1

FIG.1c

FIG. 1b

FIG. 1a

FIG.3

FIG.2

FIG.4

FIG.5

FIG.6

FIG.7